# EUROPEAN PATENT APPLICATION

(11) **EP 4 572 360 A1**
(43) Date of publication of application: **18.06.2025**
(21) Application number: 22954661.9
(22) Date of filing: 12.08.2022
(51) Int. Cl.: H04W 12/08, H04W 76/14

(54) **INFORMATION PROCESSING METHODS, APPARATUS, COMMUNICATION DEVICE AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Dehns Germany Partnerschaft mbB
(86) International application number: PCT/CN2022/112312
(87) International publication number: WO 2024/031711

(57) **Abstract**

Provided in the embodiments of the present disclosure are information processing methods, an apparatus, a communication device and a storage medium. An information processing method executed by a relay UE may comprise: receiving a direct communication request message sent by a far-end UE; according to the direct communication request message, sending a relay key request message to a first network device, the relay key request message comprising: usage for verifying whether the relay UE and/or the far-end UE uses a pre-configured safety mode to establishes a relay connection; and receiving a relay key response message sent by the first network device.

## Description

### TECHNICAL FIELD

The present disclosure relates to the technical field of wireless communication but is not limited to the technical field of wireless communication, and in particular, to an information processing method and apparatus, communication device and storage medium.

### BACKGROUND

For the security of user equipment to network relay communication in the fifth generation mobile communications (5th Generation, 5G) proximity services (ProSe), there are two optional methods of control plane (CP) based and user plane (UP) based solutions for discovery and communication over PC5 between the remote user equipment (UE) and the user equipment to network (UE to Network, U2N) relay.

It is disclosed in the related art that the UE can select whether to perform CP-based and/or UP-based security protection. For example, if the CP security indicator is configured for a specific relay service indicated by the Relay Service Code (RSC) in the U2N relay discovery parameter, the CP-based security protection is performed on the relay service. If the CP security indicator is not configured for the specific relay service indicated by the relay service code (RSC) in the U2N relay discovery parameter, the UP-based security protection is used by default for the relay service.

However, in some scenarios, the network has configured the U2N relay discovery parameter for the UE, and the relay service indicated by a specific RSC is configured or is not configured with the CP security indicator. The UE may not perform mutual discovery and communication protection between the UEs using the correct security manner according to the configuration of the network, and thus there is a certain risk of trust, security degradation, or waste of network resources in mutual discovery and communication between the UEs.

### SUMMARY

Embodiments of the present disclosure provide an information processing method and apparatus, communication device, and storage medium.

The first aspect of the embodiments of the present disclosure provides an information processing method, which is executed by a relay UE. The method includes:
receiving a direct communication request message sent by a remote UE;
sending a relay key request message to a first network device according to the direct communication request message; where the relay key request message is used to verify whether the relay UE and/or the remote UE uses a pre-configured security manner to establish a relay connection; and
receiving a relay key response message sent by the first network device.

The second aspect of the embodiments of the present disclosure provides an information processing method, which is executed by a first network device. The method includes:
receiving a relay key request message sent by a relay UE;
according to the relay key request message, verifying whether a security manner used by the relay UE when communicating between the relay UE and a remote UE is a pre-configured security manner, and obtaining a verification result; and
sending a relay key response message to the relay UE according to the verification result.

The third aspect of the embodiments of the present disclosure provides an information processing method, which is executed by a second network device. The method includes:
receiving a verification request message sent by a first network device;
according to the verification request message, determining whether a security manner used by a relay UE when communicating between the relay UE and a remote UE is a pre-configured security manner, and obtaining a verification result; and
according to the verification result, sending a verification response message to the first network device.

The fourth aspect of the embodiments of the present disclosure provides an information processing method, which is executed by a third network device. The method includes:
receiving a proximity communication authentication request message sent by a first network device;
according to the proximity communication authentication request message, verifying whether a security manner used by a remote UE when communicating between the remote UE and the relay UE is a pre-configured security manner, and obtaining a verification result; and
according to the verification result, sending a proximity communication authentication response message to the first network device.

The fifth aspect of the embodiments of the present disclosure provides an information processing method, which is executed by a fourth network device. The method includes:
receiving a verification request message sent by a third network device;
according to the verification request message, determining whether a security manner used by a remote UE when communicating between a relay UE and the remote UE is a pre-configured security manner, and obtaining a verification result; and
sending a verification response message to the third network device according to the verification result.

The sixth aspect of the embodiments of the present disclosure provides an information processing apparatus, where the apparatus includes:
a first receiving module, configured to receive a direct communication request message sent by a remote UE;
a first sending module, configured to send a relay key request message to a first network device according to the direct communication request message; where the relay key request message is used to verify whether the relay UE and/or the remote UE uses a pre-configured security manner to establish a relay connection; and
a first receiving module, configured to receive a relay key response message sent by the first network device.

The seventh aspect of the embodiments of the present disclosure provides an information processing apparatus, where the apparatus includes:
a second receiving module, configured to receive a relay key request message sent by a relay UE;
a first verification module, configured to verify, according to the relay key request message, whether a security manner used by the relay UE when communicating between the relay UE and a remote UE is a pre-configured security manner, and obtain a verification result; and
a second sending module, configured to send a relay key response message to the relay UE according to the verification result.

The eighth aspect of the embodiments of the present disclosure provides an information processing apparatus, where the apparatus includes:
a third receiving module, configured to receive a verification request message sent by a first network device;
a second verification module, configured to determine, according to the verification request message, whether a security manner used by a relay UE when communicating between the relay UE and a remote UE is a pre-configured security manner, and obtain a verification result; and
a third sending module, configured to send a verification response message to the first network device according to the verification result.

The ninth aspect of the embodiments of the present disclosure provides an information processing method. The apparatus includes:
a fourth receiving module, configured to receive a proximity communication authentication request message sent by a first network device;
a third verification module, configured to verify, according to the proximity communication authentication request message, whether a security manner used by a remote UE when communicating between the remote UE and a relay UE is a pre-configured security manner, and obtain a verification result; and
a fourth sending module, configured to send a proximity communication authentication response message to the first network device according to the verification result.

The tenth aspect of the embodiments of the present disclosure provides an information processing apparatus. The apparatus includes:
a fifth receiving module, configured to receive a verification request message sent by a third network device;
a fourth verification module, configured to determine, according to the verification request message, whether a security manner used by a remote UE when communicating between a relay UE and the remote UE is a pre-configured security manner, and obtain a verification result; and
a fifth sending module, configured to send a verification response message to the third network device according to the verification result.

The eleventh aspect of the embodiments of the present disclosure provides a communication device, including a processor, a transceiver, a memory, and an executable program stored in the memory and capable of being run by the processor, where when the processor runs the executable program, the information processing method provided in the first aspect or the second aspect is executed.

The twelfth aspect of the embodiments of the present disclosure provides a computer storage medium that stores an executable program; after the executable program is executed by a processor, the information processing method provided in the first aspect or the second aspect can be implemented.

The thirteenth aspect of the embodiments of the present disclosure provides a communication system, which includes: a remote UE, a relay UE, and a first network device;
the remote UE is configured to send a direct communication request message to the relay UE;
the relay UE is configured to receive the direct communication request message from the remote UE, and send a relay key request message to the first network device according to the direct communication request message, the relay key request message being used to verify whether the relay UE and/or the remote UE uses a pre-configured secure manner to establish a relay connection; and receive a relay key response message sent by the first network device;
the first network device is configured to receive the relay key request message, and verify whether the security manner used by the relay UE when communicating between the relay UE and the remote UE is the pre-configured security manner according to the relay key request message, and obtain a verification result; and send a relay key response message to the relay UE according to the verification result.

According to the technical solutions provided by the embodiments of the present disclosure, when the relay UE receives the direct communication request message sent by the remote UE, the network device needs to interact to verify whether the relay UE and/or the remote UE uses the security manner pre-configured by the network side to perform relay communication (or direct communication), thereby reducing security issues caused by either of the relay UE and/or the remote UE not using the pre-configured security manner, thus improving the communication security between the relay UE and the remote UE.

It should be understood that the above general description and the following detailed description are only exemplary and explanatory, and do not limit the embodiments of the present disclosure.

### BRIEF DESCRIPTION OF THE DRAWINGS

The accompanying drawings, which are incorporated in and constitute a part of this specification, illustrate the embodiments consistent with the present disclosure, and serve to explain the principles of the embodiments of the invention together with the description.
FIG. 1 is a schematic structural diagram of a wireless communication system according to an exemplary embodiment;
FIG. 2A is a schematic flowchart of an information processing method according to an exemplary embodiment;
FIG. 2B is a schematic flowchart of an information processing method according to an exemplary embodiment;
FIG. 2C is a schematic flowchart of an information processing method according to an exemplary embodiment;
FIG. 2D is a schematic flowchart of an information processing method according to an exemplary embodiment;
FIG. 2E is a schematic flowchart of an information processing method according to an exemplary embodiment;
FIG. 3A is a schematic flowchart of an information processing method according to an exemplary embodiment;
FIG. 3B is a schematic flowchart of an information processing method according to an exemplary embodiment;
FIG. 4 is a schematic flowchart of an information processing method according to an exemplary embodiment;
FIG. 5A is a schematic flowchart of an information processing method according to an exemplary embodiment;
FIG. 5B is a schematic flowchart of an information processing method according to an exemplary embodiment;
FIG. 5C is a schematic flowchart of an information processing method according to an exemplary embodiment;
FIG. 5D is a schematic flowchart of an information processing method according to an exemplary embodiment;
FIG. 6 is a schematic flowchart of an information processing method according to an exemplary embodiment;
FIG. 7 is a schematic flowchart of an information processing method according to an exemplary embodiment;
FIG. 8 is a schematic structural diagram of an information processing apparatus according to an exemplary embodiment;
FIG. 9 is a schematic structural diagram of an information processing apparatus according to an exemplary embodiment;
FIG. 10 is a schematic structural diagram of an information processing apparatus according to an exemplary embodiment;
FIG. 11 is a schematic structural diagram of an information processing apparatus according to an exemplary embodiment;
FIG. 12 is a schematic structural diagram of an information processing apparatus according to an exemplary embodiment;
FIG. 13 is a schematic structural diagram of a UE according to an exemplary embodiment; and
FIG. 14 is a schematic structural diagram of a network device according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the embodiments of the present disclosure. Rather, they are merely examples of apparatus and methods consistent with some aspects of the embodiments of the present disclosure.

The terms used in the embodiments of the present disclosure are for the purpose of describing specific embodiments only and are not intended to limit the embodiments of the present disclosure. As used in the present disclosure, the singular forms "a", "said" and "the" are intended to include the plural forms as well, unless the context clearly indicates otherwise. It should also be understood that the terms "and/or" as used herein refer to and include any or all possible combinations of one or more of the associated listed items.

It should be understood that although the terms "first", "second", "third", etc. may be used to describe various information in the embodiments of the present disclosure, the information should not be limited to these terms. These terms are only used to distinguish information of the same type from each other. For example, without departing from the scope of the embodiments of the present disclosure, the first information may also be called second information, and similarly, the second information may also be called first information. Depending on the context, words as used herein may be interpreted as "when", "upon", or "in response to determining."

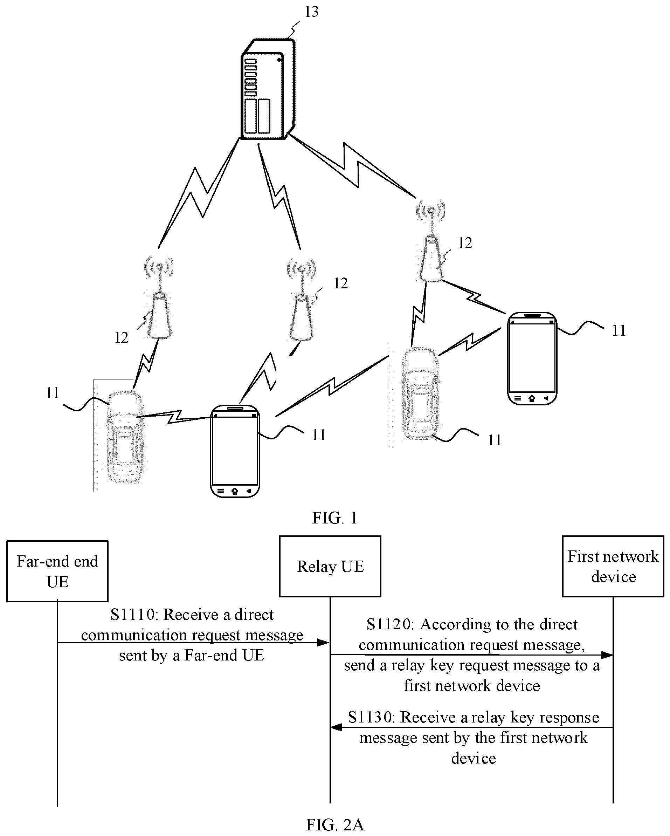

Referring to FIG. 1, FIG. 1 shows a schematic structural diagram of a wireless communication system provided by an embodiment of the present disclosure. As shown in FIG. 1, the wireless communication system is a communication system based on cellular mobile communication technology. The wireless communication system may include: several UEs 11 and several access devices 12.

The UE 11 may be a device that provides voice and/or data connectivity to users. The UE 11 can communicate with one or more core networks via a Radio Access Network (RAN). The UE 11 may be an Internet of Things UE, such as a sensor device, a mobile phone (or a cellular phone) and a computer with the Internet of Things UE, for example, it may be a fixed, portable, pocket-sized, handheld, computer-built-in or vehicle-mounted apparatus, such as, a station (STA), a subscriber unit, a subscriber station, a mobile station, a mobile, a remote station, an access point, a remote UE (remote terminal), an access UE (access terminal), a user apparatus (user terminal), a user agent, a user equipment (user device), or a user UE (user equipment, UE). Alternatively, the UE 11 may also be a device for an unmanned aerial vehicle. Alternatively, the UE 11 may also be a vehicle-mounted device, for example, it may be a driving computer with a wireless communication function, or a wireless communication device connected to an external driving computer. Alternatively, the UE 11 may also be a roadside device, for example, it may be a street light, a signal light or other roadside device with wireless communication functions.

The access device 12 may be a network-side device in the wireless communication system. The wireless communication system may be the 4th generation mobile communication technology (4G) system, also known as the Long Term Evolution (LTE) system; or the wireless communication system may also be a 5G system, also called new radio (NR) system or 5G NR system. Alternatively, the wireless communication system may also be a next-generation system of the 5G system. Among them, the access network in the 5G system may be called a New Generation-Radio Access Network (NG-RAN). Or, it may be an MTC system.

The access device 12 may be an evolved access device (eNB) used in the 4G system. Alternatively, the access device 12 may also be an access device (gNB) using a centralized distributed architecture in the 5G system. When the access device 12 adopts the centralized distributed architecture, it usually includes a central unit (CU) and at least two distributed units (DUs). The central unit is provided with a protocol stack including the Packet Data Convergence Protocol (PDCP) layer, the Radio Link Control protocol (Radio Link Control, RLC) layer, and the Media Access Control (MAC) layer; and the distributed unit is provided with a physical (PHY) layer protocol stack, and the embodiments of the present disclosure do not limit the specific implementation of the access device 12.

A wireless connection can be established between the access device 12 and the UE 11 through the wireless air interface. In different implementations, the wireless air interface is a wireless air interface based on the fourth generation mobile communication network technology (4G) standard; or the wireless air interface is a wireless air interface based on the fifth generation mobile communication network technology (5G) standard, for example, the wireless air interface is a new air interface; alternatively, the wireless air interface may also be a wireless air interface based on the next generation mobile communication network technology standard of 5G.

As shown in FIG. 2A, an embodiment of the present disclosure provides an information processing method, which is executed by a relay UE. The method includes the following steps.

In S1110: a direct communication request message sent by a remote UE is received.

In S1120: a relay key request message is sent to a first network device according to the direct communication request message; where the relay key request message is used to verify whether the relay UE and/or the remote UE uses a pre-configured security manner to establish a relay connection.

In S1130: a relay key response message sent by the first network device is received.

The relay UE is a relay device between the remote UE and the network device. The relay UE may also be called a User Equipment to Network (U2N) relay.

After receiving the direct communication request message sent by the remote UE, the relay UE may send a relay key request message to the network device according to the received direct communication request message, for example, sends the direct communication request message to the core network device of the control plane or user plane of the relay UE, specifically, for example, to the access management function (AMF) of the relay UE, or to the Prose Key Management Function (PKMF) of the relay UE, or to the direct discovery name management function (DDNMF) and other network devices.

In one embodiment, the relay UE may determine to send the relay key request message to a network device of the control plane or a network device of the user plane according to the security manner it will use. For example, if the relay UE itself selects to use the control plane based security manner, the relay UE sends the relay key request message to the network device of the control plane. For another example, if the relay UE itself selects the user plane based security manner, the relay UE sends the relay key request message to the network device of the user plane (UP).

After receiving the relay key request message, the network device may verify whether the mutual discovery and/or communication between the relay UE/or the remote UE based on the PC5 interface uses a pre-configured security manner.

There are at least two ways to establish a relay connection between the remote UE and the relay UE:
one way is the User Plane (UP) based security manner;
the other way is the Control Plane (CP) based security manner.

The two ways involve different network devices, and/or the security parameters for generating session keys may be different. The session key here includes, but is not limited to, a confidentiality protection key and/or an integrity protection key. The confidentiality protection key may be used to message encryption and decryption for relay connection establishment. The integrity protection key may be used for message integrity protection for relay connection establishment.

For example, the direct communication request message may include one or more parameters used to determine the security manner actually used by the remote UE.

For example, the one or more parameters may include at least one of the following:
a security mode indication parameter, which may be used specifically for the remote UE to indicate the security mode it uses;
a negotiation parameter, which is a parameter used to negotiate the session key.

Different security manners use different negotiation parameters for negotiating the session key. Therefore, the actual security manner used by the remote UE may be implicitly indicated according to the type of the negotiation parameter, which can reduce the bit overhead of the direct communication request message and realize the reuse of the negotiation parameter.

The relay key request message may be a message in which the relay UE requests the security parameter from the network device, and may be used here to verify whether the relay UE and/or the remote UE uses a security manner pre-configured by the network device.

For example, the relay key request message may be generated according to the direct communication request message sent by the remote UE, and the relay key request message may include: the information content carried by the direct communication request message and the information of the relay UE.

The information content carried by the direct communication request message includes but is not limited to at least one of the following:
an identifier of the remote UE;
a relay service code (RSC) of the relay service requested by the remote UE;
a negotiation parameter for negotiating the session key;
a security mode indication parameter.

The information of the relay UE may include but is not limited to: an identifier of the relay UE, etc.

The identifier of the remote UE and the identifier of the relay UE may include but are not limited to: a Subscription Concealed Identifier (SUCI) or an application layer identifier of the corresponding UE.

The relay key response message may indicate whether the relay UE and/or the remote UE uses a pre-configured security manner to establish a relay connection. The relay connection may be used for the relay UE to transmit the uplink of the remote UE to the network device, and/or forward the downlink transmission sent by the network device to the remote UE.

The remote UE may be a UE located at the edge of the network or outside the coverage of the network. The network here includes but is not limited to 3Gpp network.

The pre-configured security manner here may be: a security manner pre-configured by the network device, and/or a security manner pre-configured by the communication protocol.

By sending the direct communication request message and receiving the relay key response message, the relay UE may verify whether the direct connection between itself and the remote UE is established using a pre-configured security manner, thereby reducing the security vulnerabilities caused by not using the pre-configured security manner, and improving the security of relay connection establishment between the remote UE and the relay UE.

It is worth noting that: in the embodiments of the present disclosure, the information interaction between the relay UE and the network device on the network side may be implemented by forwarding or transparently transmitting the direct communication request message sent by the relay UE to the first network device through one or more intermediate network devices, and then forwarding or transparently transmitting the relay key response message of the first network device to the relay UE through one or more intermediate network devices.

The one or more relay network devices here may include at least a base station of the relay UE, etc.

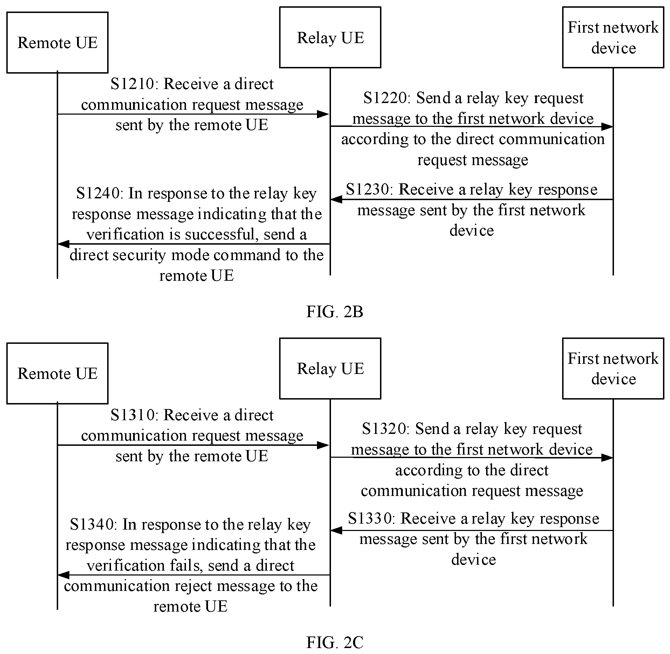

As shown in FIG. 2B, an embodiment of the present disclosure provides an information processing method, which is executed by a relay UE. The method includes the following steps.

In S1210: a direct communication request message sent by a remote UE is received.

In S1220: a relay key request message is sent to a first network device according to the direct communication request message; where the relay key request message is used to verify whether the relay UE and/or the remote UE uses a pre-configured security manner to establish a relay connection.

In S1230: a relay key response message sent by the first network device is received.

In S1240: in response to the relay key response message indicating that the verification is successful, a direct security mode command is sent to the remote UE.

In one embodiment, if the relay key response message indicates that the verification is successful, it can be considered that both the relay UE and the remote UE use a pre-configured security manner, so a secure relay connection can be established. At this time, after receiving the relay key response message, the relay UE may send a direct security mode command to the remote UE in response to the direct communication request message, to continue the subsequent steps of establishing the relay connection.

For example, if the relay UE is a trusted UE and other specific scenarios, it can only determine whether the remote UE uses a pre-configured security manner to establish a relay connection with the relay UE. At this time, if the relay key response message indicates that the remote UE uses the pre-configured security manner, the direct security mode command can be sent to the remote UE to continue the steps of establishing a direct connection between the remote UE and the relay UE.

In other embodiments, if the relay key response message identifies that the verification fails, the relay UE may not return any message to the remote UE. In this way, when the remote UE does not receive the direct security mode command of the relay UE within a period of time after sending the direct communication request message, it can be considered that the current relay connection establishment failed.

As shown in FIG. 2C, an embodiment of the present disclosure provides an information processing method, which is executed by a relay UE. The method includes the following steps.

In S1310: a direct communication request message sent by a remote UE is received.

In S1320: a relay key request message is sent to a first network device according to the direct communication request message; where the relay key request message is used to verify whether the relay UE and/or the remote UE uses a pre-configured security manner to establish a relay connection.

In S1330: a relay key response message sent by the first network device is received.

In S1340: in response to the relay key response message indicating that the verification fails, a direct communication reject message is sent to the remote UE.

In other embodiments, if the relay key response message indicates that the verification fails, a direct communication rejection message may be sent to the remote UE, and the direct communication rejection message may indicate rejection of the direct communication request message of the remote UE, that is, direct communication between the remote UE and the relay UE is rejected. In this way, after the remote UE receives the direct communication reject message, it can know that the current direct connection establishment with the relay UE has failed.

In some embodiments, the direct communication reject message may also include: a failure cause. For example, the failure cause may be indicated by a reason code. In this way, after the remote UE receives the direct communication rejection message, it can know the reason why the relay connection establishment between the remote UE and the relay UE failed this time. The failure cause may include: the relay UE does not use the pre-configured security manner, the remote UE does not use the pre-configured security manner, or neither the relay UE nor the remote UE uses the pre-configured security manner.

If the failure cause is that the remote UE does not use the pre-configured security manner and the remote UE wants to continue to establish the relay connection with the relay UE, it can change the security manner and initiate a direct communication request message again.

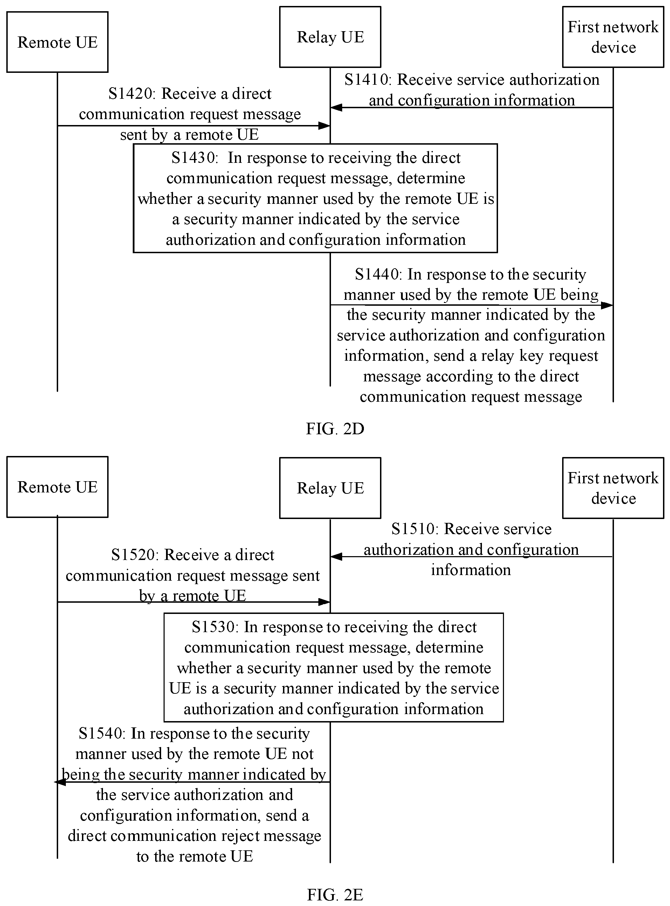

As shown in FIG. 2D, an embodiment of the present disclosure provides an information processing method, which is executed by a relay UE. The method includes the following steps.

In S1410: service authorization and configuration information is received.

In S1420: a direct communication request message sent by a remote UE is received.

In S1430: in response to receiving the direct communication request message, it is determined whether a security manner used by the remote UE is a security manner indicated by the service authorization and configuration information.

In S1440: in response to the security manner used by the remote UE being the security manner indicated by the service authorization and configuration information, a relay key request message is sent to the first network device according to the direct communication request message.

In some embodiments, in order to reduce unnecessary interactions between the relay UE and the network device, the relay UE may first locally verify whether the remote UE uses the pre-configured security manner, and after the relay UE locally verifies that the remote UE uses the pre-configured security manner, it sends the relay key request message to the network device.

The service authorization and configuration information may be sent by the network device to the relay UE in advance.

For example, when the relay UE registers with the network device, it may receive the service authorization and configuration information sent by the network device and store it locally.

For example, different relay UEs have different relay service codes (RSCs), and the direct communication request message sent by the remote UE includes the RSC. After receiving the direct communication request message, the relay UE may locally query the service authorization and configuration information corresponding to the RSC according to the RSC carried in the direct communication request message, and determine the security manner pre-configured by the network side device when establishing the relay connection based on the RSC according to the service authorization and configuration information.

If the relay UE does not locally query the service authorization and configuration information corresponding to the RSC, it may mean that the relay UE does not have the authority to provide the relay corresponding to the RSC, and may send a direct communication reject message to the remote UE, or, it is possible that the relay UE has not yet requested the corresponding service authorization and configuration information from the network device, and at this time, the relay UE may first request the network device for the service authorization and configuration information corresponding to the RSC based on the RSC.

In some implementations, when configuring the security manner, the network device may configure according to the RSC, that is, one RSC may be configured with one security manner. In this way, the RSC may have a one-to-one correspondence with the security manner pre-configured by the network device. Such one-to-one correspondence may be provided by the service authorization and configuration information issued by the network device.

For example, the service authorization and configuration information may include: RSC and a security indicator, and the security indicator may indicate a pre-configured security manner.

In some embodiments, if the relay UE does not perform local verification of whether the remote UE uses the pre-configured security manner, the relay UE may determine to send the relay key request message to the network device of the user plane or the network device of the control plane of the relay UE according to the security mode indication parameter and/or the negotiation parameter carried in the direct communication request message.

In other embodiments, if the relay UE performs local verification of whether the remote UE uses a pre-configured security manner or locally stores the service authorization and configuration information, it may determine to send the relay key request message to the network device of the user plane or the control plane according to the security manner indicated by the service authorization and configuration information.

This is an example of a specific way for the relay UE to determine the network device that receives the relay key request message, and the specific implementation is not limited to the above example.

As shown in FIG. 2E, an embodiment of the present disclosure provides an information processing method, which is executed by a relay UE. The method includes the following steps.

In S1510: service authorization and configuration information is received.

In S1520: a direct communication request message sent by a remote UE is received.

In S1530: in response to receiving the direct communication request message, it is determined whether a security manner used by the remote UE is a security manner indicated by the service authorization and configuration information.

In S1540: in response to the security manner used by the remote UE not being the security manner indicated by the service authorization and configuration information, a direct communication reject message is sent to the remote UE.

If the relay UE locally verifies that the remote UE does not use the pre-configured security manner, it may directly send a direct communication reject message to the remote UE to inform the remote UE that the relay connection establishment failed.

Alternatively, in other embodiments, the relay UE may directly ignore the direct communication request message, so that the remote UE will not receive the direct communication response message or the direct communication reject message sent by the relay UE, and the remote UE may consider by default that the relay connection establishment failed.

An embodiment of the present disclosure provides an information processing method, which is executed by a relay UE. The method includes:
receiving service authorization and configuration information;
receiving a direct communication request message sent by a remote UE;
in response to receiving a relay service indicated by an RSC in the direct communication request message and the direct communication request message includes the remote UE and a root key identifier and a random number, determining that the remote UE uses a control plane (CP) based security manner;
in response to the service authorization and configuration information indicating the CP-based security manner, determining that the security manner used by the remote UE is the security manner indicated by the service authorization and configuration information.

An embodiment of the present disclosure provides an information processing method, which is executed by a relay UE. The method includes:
receiving a direct communication request message sent by a remote UE;
receiving service authorization and configuration information;
in response to receiving a relay service indicated by an RSC in the direct communication request message and the direct communication request message includes the remote UE and a root key identifier and a random number, determining that the remote UE uses the control plane (CP) based security manner;
in response to the service authorization and configuration information indicating the user plane (UP) based security manner, determining that the security manner used by the remote UE is not the security manner indicated by the service authorization and configuration information.

When performing session key negotiation in CP-based security manner, the root key identifier and the random number generated by the remote UE will be used. The root key identifier may be carried along with a long-term credential issued by the network device and aiming at the RSC.

The root key identifier and the random number may be used for session key negotiation when establishing a relay connection between the remote UE and the relay UE.

In this way, if the service authorization and configuration information indicates the CP-based security manner, it means that it is locally verified that the remote UE does not use the security manner pre-configured by the network device. If the service authorization and configuration information indicates the CP-based security manner, it means that it is locally verified that the UE uses the security manner pre-configured by the network device.

In the embodiments of the present disclosure, the security manner used by the remote UE is implicitly indicated through the root key identifier and the random number, which has the characteristics of simple implementation.

An embodiment of the present disclosure provides an information processing method, which is executed by a relay UE. The method includes:
receiving service authorization and configuration information;
receiving a direct communication request message sent by a remote UE;
in response to receiving a relay service indicated by an RSC in the direct communication request message and the direct communication request message includes a root key identifier and a fresh parameter of a root key sent by the remote UE, determining that the remote UE uses the user plane (UP)-based security manner;
in response to the service authorization and configuration information indicating the UP-based security manner, determining that the security manner used by the remote UE is the security manner indicated by the service authorization and configuration information.

An embodiment of the present disclosure provides an information processing method, which is executed by a relay UE. The method includes:
receiving service authorization and configuration information;
receiving a direct communication request message sent by a remote UE;
in response to receiving a relay service indicated by an RSC in the direct communication request message and the direct communication request message includes a root key identifier and a fresh parameter of a root key sent by the remote UE, determining that the remote UE uses the user plane (UP)-based security manner;
in response to the service authorization and configuration information indicating a CP-based security manner, determining that the security manner used by the remote UE is not the security manner indicated by the service authorization and configuration information.

If the direct communication request message carries the root key identifier and the freshness parameter of the root key, this fresh parameter may be used to verify whether the remote UE has been attacked. In the embodiments of the present disclosure, the fresh parameter of the root key may also be used to indicate that the remote UE currently selects to use the UP-based security manner.

The root key identifier may be used for session key negotiation when the fresh parameter of the root key parameter indicates that the remote UE has not been attacked.

If the security manner pre-configured by the network device indicated by the service authorization and configuration information is the CP-based security manner, it can be considered that the remote UE does not use the security manner pre-configured by the network device. If the service authorization and configuration information indicates that the security manner pre-configured by the network device is the UP-based security manner, it can be considered that the remote UE uses the security manner pre-configured by the network device.

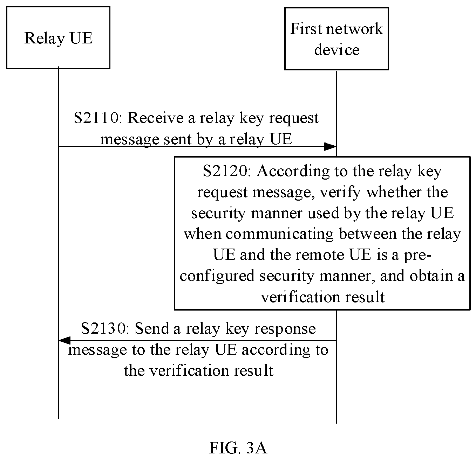

As shown in FIG. 3A, an embodiment of the present disclosure provides an information processing method, which is executed by a first network device. The method includes the following steps.

In S2110: a relay key request message sent by a relay UE is received.

In S2120: according to the relay key request message, it is verified whether the security manner used by the relay UE when communicating between the relay UE and the remote UE is a pre-configured security manner, and a verification result is obtained.

In S2130: a relay key response message is sent to the relay UE according to the verification result.

Here, the first network device may be any core network device that provides a service for the relay UE. For example, the first network device may be an AMF or PKMF that provides the service for the relay UE.

If the first network device that receives the relay key request message is a CP network device, it may be assumed that the relay UE currently uses the CP-based security manner by default. If the first network device passes the AMF of the relay UE, that is, the AMF is the serving AMF of the relay UE. The AMF of the relay UE may interact information with the policy control function (PCF) of the relay UE to determine whether the security manner pre-configured by the PCF is the CP-based security manner. If the security manner pre-configured by the PCF is not the CP-based security manner, it means that the relay UE does not use the pre-configured security manner; otherwise, it may be considered that the relay UE uses the security manner pre-configured by the network device.

If the first network device that receives the relay key request message is a UP network device, it may be assumed that the relay UE currently uses the UP-based security manner by default. If the first network device passes the PKMF of the relay UE, the AMF of the relay UE may interact information with the policy control function (PCF) of the relay UE to determine whether the security manner pre-configured by the PCF is the UP-based security manner. If the security manner pre-configured by the PCF is not the UP-based security manner, it means that the relay UE does not use the pre-configured security manner; otherwise, it means that the relay UE uses the security manner pre-configured by the network device.

For example, the relay key request message may be generated according to the direct communication request message sent by the remote UE, and the relay key request message may include: information content carried by the direct communication request message and information of the relay UE.

The information content carried by the direct communication request message includes but is not limited to at least one of the following:
an identifier of the remote UE;
a relay service code (RSC) of a relay service requested by the remote UE;
a negotiation parameter for negotiating a session key;
a security mode indication parameter.

The information of the relay UE may include but is not limited to: an identifier of the relay UE, etc.

In this way, the first network device may verify whether the remote UE uses the security manner pre-configured by the network device through interaction with the core network device that provides the service to the remote UE.

In one embodiment, according to the verification result of whether the relay UE and/or the remote UE uses the pre-configured security manner, in the case that at least one UE is verified to not use the pre-configured security manner, the first network device can promptly return a relay key response message to the relay UE, and the relay key response message indicates that the verification failed.

In another embodiment, the first network device may return the corresponding relay key response message to the relay UE after obtaining two verification results of the relay UE and the remote UE, such that the relay key response message may specifically indicate whether the verification is successful or failed, as well as which UE caused the verification failure and the reason for the failure.

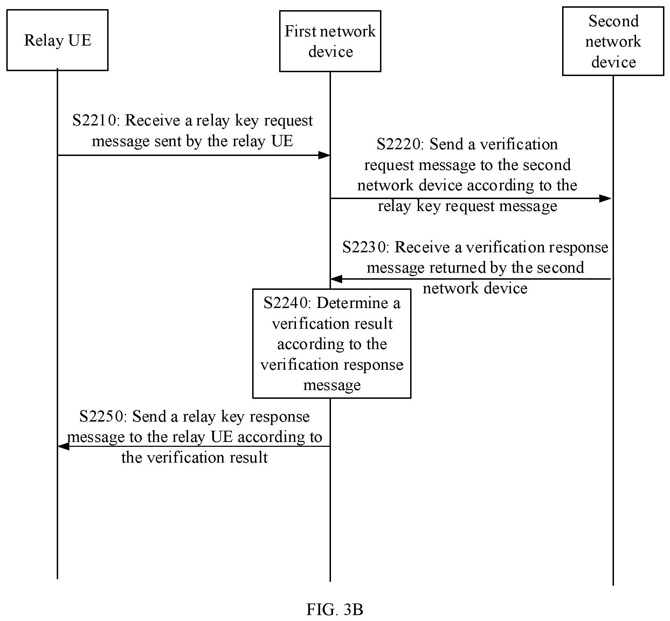

As shown in FIG. 3B, an embodiment of the present disclosure provides an information processing method, which is executed by a first network device. The method includes the following steps.

In S2210: a relay key request message sent by a relay UE is received.

In S2220: a verification request message is sent to a second network device according to the relay key request message.

In S2230: a verification response message returned by the second network device is received.

In S2240: a verification result is determined according to the verification response message.

In S2250: a relay key response message is sent to the relay UE according to the verification result.

For example, the second network device may be the PCF of the relay UE.

The first network device may send the verification request message to the second network device according to the relay key request message. The verification request message may be used by the PCF to verify whether the relay UE has a pre-configured security manner.

For example, the verification response message may include at least: the identifier of the relay UE and the RSC.

After the second network device such as the PCF receives the verification request message, the security manner configured by the PCF for the relay UE may be determined according to the identifier of the relay UE and the RSC. If the first network device is a network device of the CP, and the PCF pre-configures the CP-based security manner for the relay UE, it may be considered that the current relay UE uses the pre-configured security manner, otherwise it may be considered that the relay UE does not use the pre-configured security manner. If the first network device is a network device of UP, and the PCF pre-configures a CP-based security manner for the relay UE, it can be considered that the current relay UE does not use the pre-configured security manner, otherwise, it can be considered that the relay UE uses the pre-configured security manner.

In some embodiments, according to the relay key request message, verifying whether the security manner used by the relay UE when communicating between the relay UE and the remote UE is a pre-configured security manner and obtaining the verification result include:
according to the relay key request message,
when the relay key request message determines that the security manner used by the relay UE is not the security manner pre-configured by the second network device, sending the relay key response message indicating that the verification fails to the relay UE;
when it is determined according to the relay key request message that the security manner used by the relay UE is the security manner pre-configured by the second network device, sending a proximity communication authentication request message to a third network device.

In this embodiment, if it is determined that the relay UE does not use the security manner pre-configured by the second network device, a relay key response message indicating that the verification fails is directly returned to the relay UE, which is equivalent to directly notifying the relay UE that it can terminate the establishment of the relay connection with the remote UE.

When the security manner used by the relay UE is the security manner pre-configured by the second network device, in the embodiments of the present disclosure, it may be further verified whether the remote UE uses the pre-configured security manner. In this embodiment, the second network device may send the proximity communication authentication request message to the third network device. The proximity communication authentication request message may be used to request the third network device to perform network-side verification on whether the remote UE uses the pre-configured security manner.

For example, the proximity communication authentication request message may be sent according to the received relay key request message. For example, the proximity communication authentication request message may include at least: information about the remote UE, an RSC, and a parameter indicating the security manner actually used by the remote UE currently. The parameter indicating the security manner actually used by the remote UE here includes but is not limited to the security mode indication parameter provided in any of the foregoing embodiments, and/or is used to generate a negotiation parameter of a session key between the remote UE and the relay UE.

The information of the remote UE may include at least an identifier of the remote UE, and the identifier may be used by the network device to uniquely identify the remote UE. For example, the remote UE may include, but is not limited to, an application layer identifier of the remote UE.

In some embodiments, the method further includes:
receiving a proximity communication authentication response message sent by the third network device;
sending a relay key response message to the relay UE according to the proximity communication authentication request message.

For example, when the proximity communication authentication request message indicates that the remote UE uses the security manner pre-configured by the network device, a relay key response message indicating that the verification is successful is sent to the relay UE.

When the proximity communication authentication request message indicates that the remote UE does not use the security manner pre-configured by the network device, a relay key response message indicating that the verification fails is sent to the relay UE.

For example, the relay key response message indicating that the verification fails may include a failure cause. In this way, after the relay UE receives the relay key response message including the failure cause, it may be considered that at least one of the relay UE and the remote UE does not use the pre-configured security manner, so that the relay connection can no longer be established with the remote UE.

As another example, the relay key response message indicating that the verification is successful may include a success indication. In this way, after the relay UE receives the relay key response message containing the failure cause, it can be considered that both the relay UE and the remote UE have used the pre-configured security manner, so that the relay connection can continue to be established with the remote UE.

As another example, the relay key response message indicating that the verification is successful may include the parameter provided by the network device, such as the root key and the random number for deriving the session key, so that after the relay UE receives the relay key response message including the root key and the random number, it can be considered that both the relay UE and the remote UE have used the pre-configured security manner, so that the relay connection can continue to be established with the remote UE.

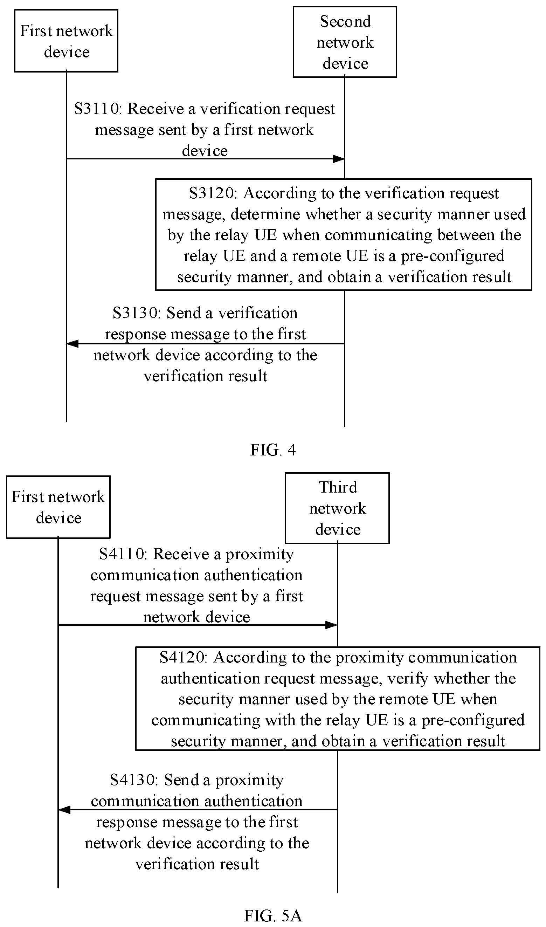

As shown in FIG. 4, an embodiment of the present disclosure provides an information processing method, which is executed by a second network device. The method includes the following steps.

In S3110: a verification request message sent by a first network device is received.

In S3120: according to the verification request message, it is determined whether a security manner used by a relay UE when communicating between the relay UE and a remote UE is a pre-configured security manner, and a verification result is obtained.

In S3130: a verification response message is sent to the first network device according to the verification result.

The verification request message may be a message requesting verification of whether the relay UE uses a pre-configured security manner.

The second network device may be the PCF of the relay UE, and may verify whether the relay UE uses a pre-configured security manner to establish a relay connection with the remote UE, and obtain the verification result.

The verification response message is sent to the first network device according to the verification result.

If the verification result indicates that the verification fails, the verification response message indicates that the verification fails; if the verification result indicates that the verification is successful, the verification response message indicates that the verification is successful.

For example, according to the relay service indicated by the RSC in the verification request message, determining whether the security manner used by the relay UE when communicating between the relay UE and the remote UE is the security manner pre-configured for the relay service and obtaining the verification result, includes:

when the verification request message is received and the second network device pre-configures a user plane (UP)-based security manner for the relay service indicated by the RSC in the verification request message, determining that the security manner used by the relay UE when communicating between the relay UE and the remote UE is not the pre-configured security manner;
or,
when the verification request message is received and the second network device pre-configures a user plane (CP)-based security manner for the relay service indicated by the RSC in the verification request message, determining the security manner used by the relay UE when communicating between the relay UE and the remote UE is the pre-configured security manner.

In some embodiments, the second network device stores policy information and the like configured for the relay UE. According to the policy information and the like, it can be verified whether the relay UE uses the security manner indicated by the policy information (or configuration information).

If the verification request message comes from the control plane network device of the relay UE, it is considered that the security manner currently used by the relay UE may be the CP-based security manner; if the verification request message comes from the UP network device of the relay UE, then it may be considered that the security manner actually used by the relay UE is the UP-based security manner.

There are many ways for the second network device to verify whether the relay UE uses the pre-configured security manner, and the specific implementation is not limited to the above example.

As shown in FIG. 5A, an embodiment of the present disclosure provides an information processing method, which is executed by a third network device. The method includes the following steps.

In S4110: a proximity communication authentication request message sent by a first network device is received.

In S4120: according to the proximity communication authentication request message, it is verified whether the security manner used by the remote UE when communicating with the relay UE is a pre-configured security manner, and a verification result is obtained.

In S4130: a proximity communication authentication response message is sent to the first network device according to the verification result.

In the embodiments of the present disclosure, the third network device may be an Authentication Server Function (AUSF) of the remote UE.

After receiving the proximity communication authentication request message sent by the first network device, the third network device may verify whether the security manner used by the remote UE when communicating between the remote UE and the relay UE is the pre-configured security manner, and obtain the verification result.

The proximity communication authentication request message may include: an identifier of the remote UE and an RSC corresponding to a relay communication between the remote UE and the relay UE. In some embodiments, the proximity communication authentication request message may further include: information that can be used for the security manner used by the remote UE when communicating with the relay UE.

The AUSF may also verify whether the remote UE uses a pre-configured security manner according to identifier of the remote UE and the RSC in the proximity communication authentication request message.

For example, the third network device such as the AUSF may locally verify whether the remote UE uses a pre-configured security manner according to the policy information or configuration information requested from the PCF of the remote UE at the historical moment.

For another example, the third network device such as the AUSF may exchange information with the PCF of the remote UE, thereby verifying whether the remote UE uses the pre-configured security manner according to the exchanged information.

In short, there are many ways for the third network device such as the AUSF to determine whether the remote UE uses the pre-configured security manner, and the specific implementation is not limited thereto.

At the same time, the AUSF may also verify whether the remote UE supports the relay service of the RSC according to the RSC and the identifier of the remote UE. When the remote UE supports the relay service corresponding to the RSC, the key parameter for generation of the session key required for subsequent relay communications between the remote UE and the relay UE can also be provided. The key parameter includes but is not limited to: a root key identifier and/or a random number generated by AUSF, etc.

The verification result includes: verifying that the remote UE uses the pre-configured security manner, and verifying that the remote UE does not use the pre-configured security manner.

The third network device may return a proximity communication authentication response message indicating success or failure of verification to the first network device according to the authentication result.

In some embodiments, according to the proximity communication authentication request message, verifying whether the security manner used by the remote UE when communicating with the relay UE is the pre-configured security manner, and obtaining the verification result, includes:
sending a verification request message to a fourth network device according to the proximity communication authentication request message;
receiving a verification response message returned by the fourth network device;
determining the verification result according to the verification response message.

The fourth network device may be the PCF of the remote UE. The PCF of the remote UE stores information such as policy information and/or configuration information of the remote UE, which can determine the security manner configured in advance for the remote UE.

In this way, the third network device such as AUSF can obtain the verification result through communication with the fourth network device.

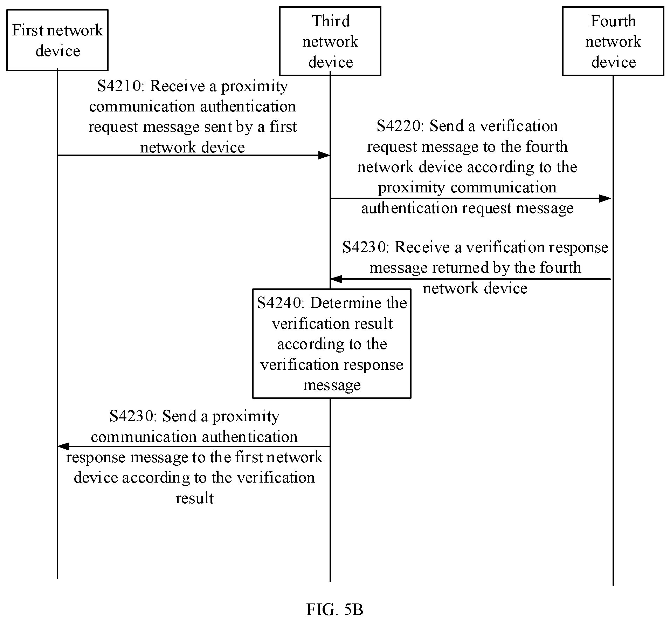

That is, as shown in FIG. 5B, an embodiment of the present disclosure provides an information processing method, which is executed by a third network device. The method includes the following steps.

In S4210: a proximity communication authentication request message sent by a first network device is received.

In S4220: a verification request message is sent to the fourth network device according to the proximity communication authentication request message.

In S4230: a verification response message returned by the fourth network device is received.

In S4240: the verification result is determined according to the verification response message.

In S4230: a proximity communication authentication response message is sent to the first network device according to the verification result.

In the embodiments of the present disclosure, the verification request message is sent according to the proximity communication authentication request message. The verification request message may include content covered by the proximity communication authentication request message, for example, the identifier of the remote UE and the RSC, and/or information used to determine the security manner used for relay communication between the remote UE and the relay UE.

For example, the proximity communication authentication request message may be included in the verification request message and sent to the fourth network device, or the content contained in the proximity communication authentication request message may be extracted and then the verification request message is generated according to the extracted content.

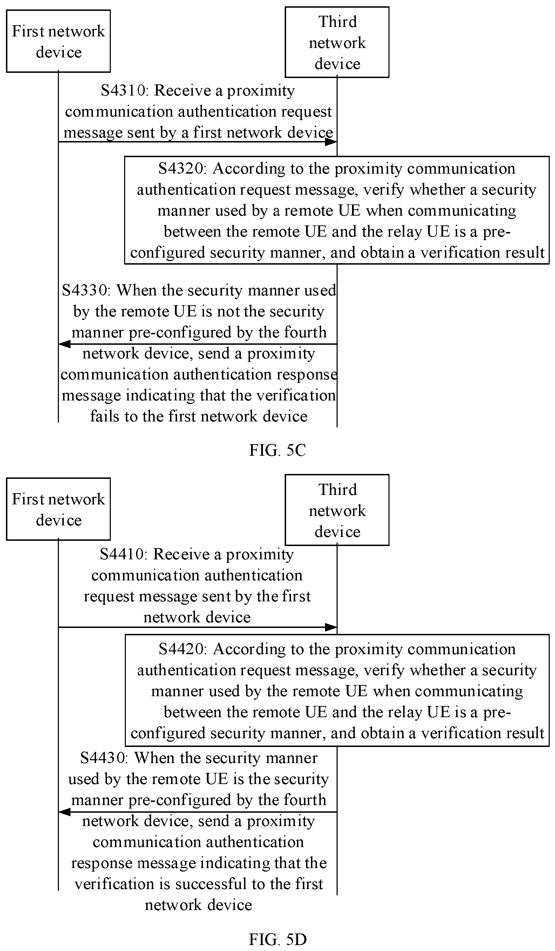

As shown in FIG. 5C, an embodiment of the present disclosure provides an information processing method, which is executed by the third network device. The method includes the following steps.

In S4310: a proximity communication authentication request message sent by the first network device is received.

In S4320: according to the proximity communication authentication request message, it is verified whether a security manner used by a remote UE when communicating between the remote UE and the relay UE is a pre-configured security manner, and a verification result is obtained.

In S4330: when the security manner used by the remote UE is not the security manner pre-configured by the fourth network device, a proximity communication authentication response message indicating that the verification fails is sent to the first network device.

As shown in FIG. 5D, an embodiment of the present disclosure provides an information processing method, which is executed by a third network device. The method includes the following steps.

In S4410: a proximity communication authentication request message sent by the first network device is received.

In S4420: according to the proximity communication authentication request message, it is verified whether a security manner used by the remote UE when communicating between the remote UE and the relay UE is a pre-configured security manner, and a verification result is obtained.

In S4430: when the security manner used by the remote UE is the security manner pre-configured by the fourth network device, a proximity communication authentication response message indicating that the verification is successful is sent to the first network device.

In some embodiments, the proximity communication authentication response message indicating that the verification fails includes: a failure cause; and/or the proximity communication authentication response message indicating that the verification is successful includes: an intermediate key for relay transmission between the relay UE and the remote UE.

Specifically, the failure cause may be carried by a failure cause code, and different failure cause codes may represent different failure causes. For example, the remote UE does not support the security manner pre-configured by the network, the remote UE2 does not use the security manner pre-configured by the network device, or the remote UE does not support the relay service indicated by the RSC.

In some embodiments, the proximity communication authentication response message may include: a proximity communication authentication rejection message and a proximity communication authentication confirmation message; the message formats of the proximity communication authentication rejection message and the proximity communication authentication confirmation message are different. The proximity communication authentication response message may indicate that the verification fails, and the proximity communication authentication confirmation message may indicate that the verification is successful.

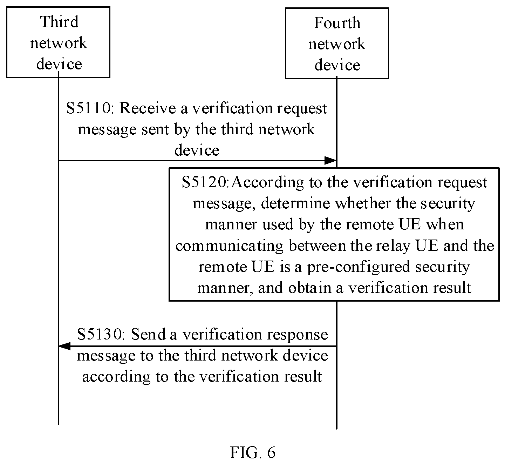

As shown in FIG. 6, an embodiment of the present disclosure provides an information processing method, which is executed by a fourth network device. The method includes the following steps.

In S5110: a verification request message sent by a third network device is received.

In S5120: according to the verification request message, it is determined whether the security manner used by the remote UE when communicating between the relay UE and the remote UE is a pre-configured security manner, and a verification result is obtained.

In S5130: a verification response message is sent to the third network device according to the verification result.

The fourth network device may be a core network device such as the PCF of the remote UE.

The fourth network device may receive a verification request message provided by the third network device, and the verification request message may include the identifier of the remote UE and/or RSC, etc.

The procedure for the fourth network device to verify whether the remote UE adopts the security manner pre-configured by the fourth network device is the same as the second network device verifying whether the relay UE uses the security manner pre-configured by the second network device.

In short, the fourth network device can complete verification of whether the remote UE uses the pre-configured security manner according to its own stored policy information and/or configuration information, and returns the verification result to the third network device. After receiving the verification result through the verification response message, the third network device may return the corresponding verification result to the first network device of the relay UE, and finally return the verification result to the relay UE for the relay UE to determine whether it needs to continue to complete the establishment of the relay connection and the execution of subsequent relay communication with the remote UE.

For example, according to the relay service indicated by the RSC in the verification request message, determining whether the security manner used by the remote UE when communicating between the relay UE and the remote UE is a pre-configured security manner, and obtaining the verification result, includes:
when the verification request message is received and the fourth network device pre-configures a user plane (UP)-based security manner for the relay service indicated by the RSC in the verification request message, determining that the security manner used by the remote UE when communicating between the relay UE and the remote UE is not the pre-configured security manner;
   or,
when the verification request message is received and the fourth network device pre-configures a user plane (CP)-based security manner for the relay service indicated by the RSC in the verification request message, determining that the security manner used by the remote UE when communicating between the relay UE and the remote UE is the pre-configured security manner.

A PC5 link is established between the remote UE and the relay UE of services such as 5G ProSe. The PC5 link may be one of the aforementioned relay links. For example, the relay link may be established based on the PC5 interface or the SR interface.

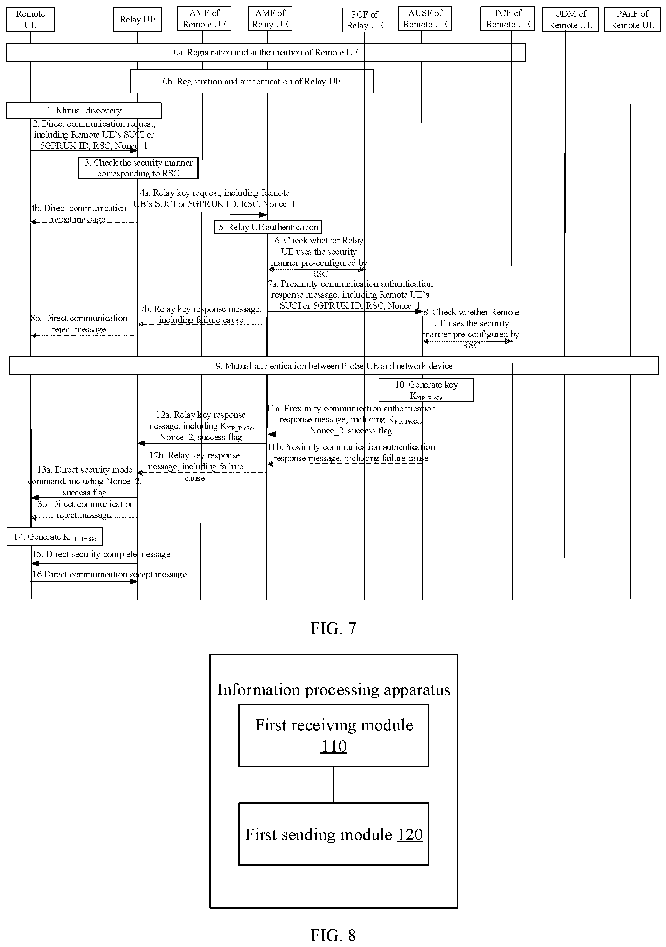

In the embodiments of the present disclosure, the U2N relay and the AMF of the U2N relay perform an authentication process on the remote UE, and simultaneously it is verified whether the remote UE and/or the relay UE uses a security manner pre-configured by the network to perform establishment and verification of the relay link. As shown in FIG. 7, the information processing method provided by the embodiment of the present disclosure may includes the following steps.
0. The remote UE and the U2N relay (i.e., the relay UE) register with the network respectively. The U2N relay shall be authenticated and authorized by the network to provide U2N relay service. The remote UE shall be authenticated and authorized to be determined to have the authority to accept the U2N relay service. During the service authorization and configuration information provisioning procedure, the UEs need to obtain the service authorization and configuration information of the U2N relay service. The service authorization and configuration information may include at least RSC. For example, the service authorization and configuration information may also include: a control plane security indicator, which may be used to indicate the use of a CP-based security manner. It is worth noting that the security indicator of the control plane is an optional parameter of the service authorization and configuration information. If the service authorization and configuration information does not have the security indicator of the control plane, the UP-based security manner is used by default. Subsequently, the relay UE does not need to locally verify whether the remote UE uses the security manner pre-configured by the network side, but directly requests the network side to verify whether the remote UE uses the security manner pre-configured by the network side by using the relay key request message.
1. The U2N relay initiates a discovery procedure between UEs for the relay service indicated by the RSC using mode A, or the remote UE initiates the discovery procedure between UEs for the relay service indicated by the RSC using mode B.
2. After completing the discovery between the remote UE and the relay UE, the remote UE sends a Direct Communication Request (DCR) message to the U2N relay. The direct communication request message includes RSC, and the direct communication request is used to request the establishment of a secure PC5 unicast link between the relay UE and the remote UE.
3. The U2N relay determines whether the relay communication uses CP-based or UP-based security procedure according to the received RSC and the parameter provided by its own PCF.

If the received DCR contains the 5G proximity service relay user key identification (5GPRUK ID) and the random number 1 (Nonce_1), it means that the remote UE initiated the DCR using the CP-based security procedure. If the U2N relay is configured with the security indicator of the CP associated with the requested RSC as received, the U2N relay determines that the actual behavior of the remote UE matches the network configuration. Then the U2N relay proceeds to step #4a.

If the received DCR contains the PRUK ID and/or the freshness parameter of K_{NRP}, it means that the remote UE initiated the DCR using the UP-based security procedure. If the U2N relay is configured with a CP security indicator associated with the requested RSC as received, the U2N relay determines that there is a mismatch between the network configuration and the security manner actually used by the remote UE. Then the U2N relay proceeds to step #4b.

4a. If the verification in step 3 is successful, the U2N relay sends a relay key request to the AMF of the U2N relay. The content of the request includes: SUCI or 5G PRUK ID, RSC and Nonce_1 received in the DCR message.

4b. If the verification in step 3 is unsuccessful, the U2N relay sends a direct communication reject message to the remote UE.

5. The AMF of the U2N relay verifies whether the U2N relay is authorized to provide the relay service.

6. Based on the received RSC in the relay key request message, the AMF of the U2N relay checks with the PCF of the U2N relay on whether the U2N relay is correctly using the security manner configured by the network for the requested RSC.

7a. If the check with the PCF is successful, the AMF of the U2N relay selects an AUSF of the remote UE based on SUCI or 5GPRUK ID and forwards the parameter received in the relay key request to the AUSF of the remote UE, and then proceeds to step # 8a.

7b. If the check with the PCF is unsuccessful, the AMF of the U2N relay sends the relay key response message to the relay terminal and gives the failure cause. Then the U2N relay proceeds to step #8b.

8a. Based on the received RSC in the Nausf_UEAuthentication_ProseAuthenticate Request message from the AMF of the U2N relay, the AUSF of the remote UE checks with the PCF of the remote UE on whether the security manner being used is the security manner assigned by the network.

If the check is successful, the AUSF of the remote UE proceeds to step 9. If the check is unsuccessful, the AUSF of the remote UE proceeds to step #11b.

8b. After receiving the relay key response message from the AMF, the U2N relay sends the direct communication reject message to the remote UE.

9. The 5G ProSe authentication is performed between the remote UE and the network.

10. The AUSF of the remote UE generates random number 2 (Nonce_2), and derives the K_{NR_ProSe} key using 5GPRUK, random number 1 (Nonce_1) and random number 2 (Nonce_2).

11a. The AUSF of the remote UE sends the Nausf_UEAuthentication _ProseAuthenticate response message containing K_{NR_ProSe}, Nonce_2, etc. to the AMF of the U2N relay, and the U2N relay proceeds to step #12a. The Nausf_UEAuthentication _ProseAuthenticate response message is one of the aforementioned proximity communication authentication response messages, and may include a success flag, which may be an optional parameter. That is, in some embodiments, if the proximity communication authentication response message includes K_{NR_ProSe} and Nonce_2 provided by AUSF, it means that the verification is successful. The success flag may be recorded as: EAP Success.

11b. The AUSF of the remote UE sends the Nausf_UEAuthentication_ProseAuthenticate response message containing the failure cause to the AMF of the U2N relay, and the U2N relay proceeds to step #12b.

12a. The AMF of the U2N relay sends the relay key response message containing K_{NR_ProSe}, Nonce_2, etc. to the U2N relay, and the U2N relay proceeds to step #13a.

12b. The AMF of the U2N relay sends the Relay Key Response message containing the failure cause to the U2N relay, and the U2N relay proceeds to step 13b.

13a. The U2N relay derives the relay key K_{relay-sess} of PC5 from KNR_ProSe, and generates the confidentiality protection key K_{relay-enc} and/or the integrity key K_{relay-int} based on the intermediate key, and then sends a direct security mode command message including the Nonce_2 to the remote UE, which proceeds to step #14.

13b. The U2N relay sends the direct communication reject message to the remote UE. The remote UE stops proceeding the following steps after receiving this direct communication reject message.

14. The remote UE generates the key K_{NR_ProSe}, which is used for remote access via the U2N relay. The remote UE also derives the PC5 session key K_{relay-sess} and the confidentiality key and the integrity key from K_{NR_ProSe} in the same way as defined in step #13a.

15. The remote UE sends the direct security mode complete message to the U2N relay, and the U2N relay is protected by K_{relay-int} or/and K_{relay-enc} derived from K_{relay-sess}.

16. Direct communication accept message transmission. For example, after the successful verification of the direct security mode complete message, the U2N relay responds a direct communication accept message to the remote UE to finish the PC5 connection establishment procedure and store the security context associated with the PC5 link in the remote UE.

It is worth noting that PAnF in FIG. 7 is the English abbreviation of ProSe anchor point function.

As shown in FIG. 8, an embodiment of the present disclosure provides an information processing apparatus, which includes:
a first receiving module 110, configured to receive a direct communication request message sent by a remote UE;
a first sending module 120, configured to send a relay key request message to a first network device according to the direct communication request message; where the relay key request message is used to verify whether the relay UE and/or the remote UE uses a pre-configured security manner to establish a relay connection; and
the first receiving module 110 being configured to receive a relay key response message sent by the first network device.

In some embodiments, the information processing apparatus may be included in the relay UE.

In some embodiments, the first receiving module 110 and the first sending module 120 may be program modules; after the program modules are executed by a processor, the above operations can be implemented.

In other embodiments, the first receiving module 110 and the first sending module 120 may be software-hardware combination modules; the software-hardware combination module includes but is not limited to a programmable array; the programmable array includes but is not limited to a field programmable array and/or a complex programmable array.

In some embodiments, the first receiving module 110 and the first sending module 120 may be pure hardware modules; the pure hardware module includes but is not limited to an application specific integrated circuit.

In some embodiments, the first sending module 120 is further configured to send a direct security mode command to the remote UE in response to the relay key response message indicating that the verification is successful.

In some embodiments, the first sending module 120 is configured to send a direct communication reject message to the remote UE in response to the relay key response message indicating that the verification fails.

In some embodiments, the first receiving module 110 is further configured to receive service authorization and configuration information.

The apparatus further includes:
a determining module, configured to determine whether a security manner used by the remote UE is a security manner indicated by the service authorization and configuration information in response to receiving the direct communication request message;
the first sending module 120 is configured to, in response to the security manner used by the remote UE being the security manner indicated by the service authorization and configuration information, send a relay key request message to the first network device according to the direct communication request message.

In some embodiments, the first sending module 120 is further configured to send a direct communication reject message to the remote UE in response to that the security manner used by the remote UE being not the security manner indicated by the service authorization and configuration information.

In some embodiments, the determining module is configured to, in response to receiving a relay service indicated by an RSC in the direct communication request message and the direct communication request message including the remote UE and a root key identifier and a random number, determine that the remote UE uses a control plane (CP)-based security manner; in response to the service authorization and configuration information indicating the CP-based security manner, determine that the security manner used by the remote UE is the security manner indicated by the service authorization and configuration information; or, in response to the service authorization and configuration information indicating the user plane (UP)-based security manner, determine that the security manner used by the remote UE is not the security manner indicated by the service authorization and configuration information.

In some embodiments, the determining module is configured to, in response to receiving the relay service indicated by the RSC in the direct communication request message and the direct communication request message including the root key identifier and the fresh parameter of the root key sent by the remote UE, determine that the remote UE uses the user plane (UP)-based security manner; in response to the service authorization and configuration information indicating the UP-based security manner, determine that the security manner used by the remote UE is the security manner indicated by the service authorization and configuration information; or, in response to the service authorization and configuration information indicating the CP-based security manner, determine that the security manner used by the remote UE is not the security manner indicated by the service authorization and configuration information.

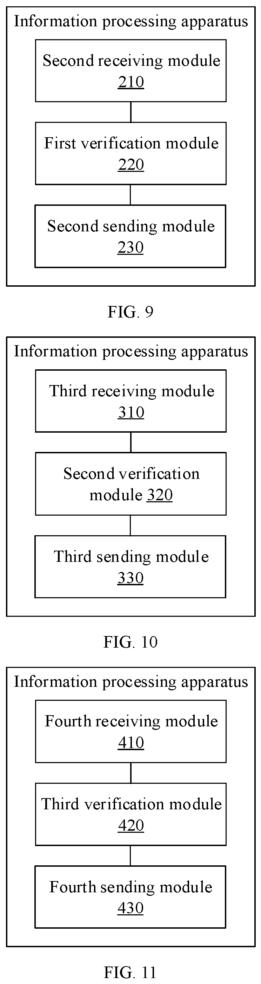

As shown in FIG. 9, an embodiment of the present disclosure provides an information processing apparatus, where the apparatus includes:
a second receiving module 210, configured to receive a relay key request message sent by a relay UE;
a first verification module 220, configured to verify, according to the relay key request message, whether a security manner used by the relay UE when communicating between the relay UE and the remote UE is a pre-configured security manner, and obtain a verification result;
a second sending module 230, configured to send a relay key response message to the relay UE according to the verification result.

The information processing apparatus may be the aforementioned first network device.

In some embodiments, the second receiving module 210, the first verification module 220, and the second sending module 230 may be program modules; after the program modules are executed by a processor, the above operations can be implemented.

In other embodiments, the second receiving module 210, the first verification module 220 and the second sending module 230 may be pure hardware modules; the pure hardware modules include but are not limited to: application specific integrated circuits.

In some embodiments, the second receiving module 210, the first verification module 220 and the second sending module 230 may also be software-hardware combination modules; the software-hardware combination modules include but are not limited to programmable arrays.

In some embodiments, the second sending module 230 is further configured to send a verification request message to the second network device according to the relay key request message;
the second receiving module 210 is further configured to receive a verification response message returned by the second network device;
the first verification module 220 is configured to determine the verification result according to the verification response message.

In some embodiments, the first verification module 220 is configured to, according to the relay key request message, when the relay key request message determines that the security manner used by the relay UE is not the security manner pre-configured by the second network device, send the relay key response message indicating that the verification fails to the relay UE; when determining that the security manner used by the relay UE is the security manner pre-configured by the second network device according to the relay key request message, send a proximity communication authentication request message to the third network device.

As shown in FIG. 10, an embodiment of the present disclosure provides an information processing apparatus, where the apparatus includes:
a third receiving module 310, configured to receive a verification request message sent by the first network device;
a second verification module 320, configured to determine, according to the verification request message, whether a security manner used by the relay UE when communicating between the relay UE and the remote UE is a pre-configured security manner, and obtain a verification result;
a third sending module 330, configured to send a verification response message to the first network device according to the verification result.

The information processing apparatus may be a second network device, and the second network device may include a PCF.

In some embodiments, the third receiving module 310, the second verification module 320 and the third sending module 330 may be pure software modules; the pure software modules include but are not limited to program modules; after the program modules are executed by a processor, the above operations can be implemented.

In some embodiments, the third receiving module 310, the second verification module 320 and the third sending module 330 may also be software-hardware combination modules; the software-hardware combination modules include but are not limited to various programmable arrays; the programmable array includes, but is not limited to: a field programmable array and/or a complex programmable array.

In some embodiments, the third receiving module 310, the second verification module 320 and the third sending module 330 also include pure hardware modules; the pure hardware modules include but are not limited to application specific integrated circuits.

In some embodiments, the second verification module 320 is configured to, when the verification request message is received and the second network device pre-configures the user plane (UP)-based security manner for the relay service indicated by the RSC in the verification request message, determine that the security manner used by the relay UE when communicating between the relay UE and the remote UE is not the pre-configured security manner;
or,
when the verification request message is received and the second network device pre-configures a user plane (CP)-based security manner for the relay service indicated by the RSC in the verification request message, determine that the security manner used by the relay UE when communicating between the relay UE and the remote UE is the pre-configured security manner.

As shown in FIG. 11, an embodiment of the present disclosure provides an information processing method. The apparatus includes:
a fourth receiving module 410, configured to receive a proximity communication authentication request message sent by the first network device;
a third verification module 420, configured to verify, according to the proximity communication authentication request message, whether a security manner used by the remote UE when communicating between the remote UE and the relay UE is a pre-configured security manner, and obtain a verification result;
a fourth sending module 430, configured to send a proximity communication authentication response message to the first network device according to the verification result.

The information processing apparatus may be the second network device, that is, a PCF of the relay UE.

In some embodiments, the fourth receiving module 410, the third verification module 420 and the fourth sending module 430 may be pure software modules; the pure software modules include but are not limited to program modules; after the program modules are executed by a processor, the above operations can be implemented.

In some embodiments, the fourth receiving module 410, the third verification module 420 and the fourth sending module 430 may also be software-hardware combination modules; the software-hardware combination modules include but are not limited to various programmable arrays; the programmable array includes but is not limited to: a field programmable array and/or a complex programmable array.

In some embodiments, the fourth receiving module 410, the third verification module 420 and the fourth sending module 430 also include pure hardware modules; the pure hardware modules include but are not limited to application specific integrated circuits.

In some embodiments, the third verification module 420 is configured to send a verification request message to a fourth network device according to the proximity communication authentication request message; receive a verification response message returned by the fourth network device; determine the verification result according to the verification response message.

In some embodiments, the third verification module 420 is configured to send the proximity communication authentication response message indicating that the verification fails to the first network device when the security manner used by the remote UE is not the security manner pre-configured by the fourth network device; when the security manner used by the remote UE is the security manner pre-configured by the fourth network device, send the proximity communication authentication response message indicating that the verification is successful to the first network device..

In some embodiments, the proximity communication authentication response message indicating that the verification fails includes: a failure cause;
and/or,
the proximity communication authentication response message indicating that the verification is successful includes: an intermediate key for relay transmission between the relay UE and the remote UE.

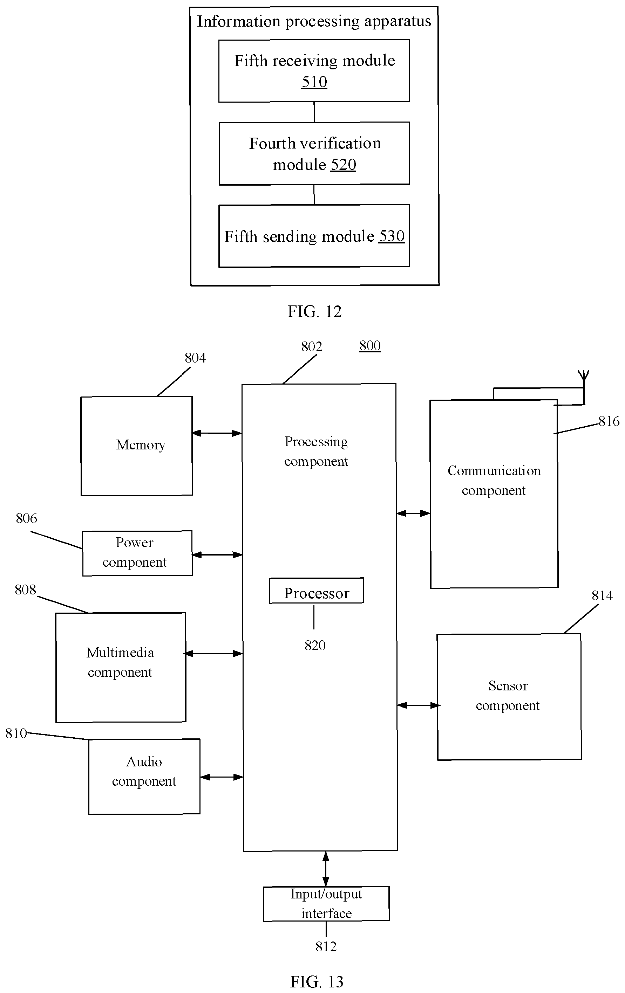

As shown in FIG. 12, an embodiment of the present disclosure provides an information processing apparatus, which includes:
a fifth receiving module 510, configured to receive a verification request message sent by the third network device;
a fourth verification module 520, configured to determine, according to the verification request message, whether a security manner used by the remote UE when communicating between the relay UE and the remote UE is a pre-configured security manner, and obtain a verification result;
a fifth sending module 530, configured to send a verification response message to the third network device according to the verification result.

The information processing apparatus may be the PCF of the relay UE.

In some embodiments, the fifth receiving module 510, the fourth verification module 520 and the fifth sending module 530 may be pure software modules; the pure software modules include but are not limited to program modules; after the program modules are executed by a processor, the above operations can be implemented.

In some embodiments, the fifth receiving module 510, the fourth verification module 520 and the fifth sending module 530 may also be software-hardware combination modules; the software-hardware combination modules include but are not limited to various programmable arrays; the programmable array includes, but is not limited to: a field programmable array and/or a complex programmable array.

In some embodiments, the fifth receiving module 510, the fourth verification module 520 and the fifth sending module 530 also include pure hardware modules; the pure hardware modules include but are not limited to application specific integrated circuits.

In some embodiments, the fourth verification module 520 is configured to, when the verification request message is received and the fourth network device pre-configures the user plane (UP)-based security manner for the relay service indicated by the RSC in the verification request message, determine that the security manner used by the remote UE when communicating between the relay UE and the remote UE is not the pre-configured security mode; or, when the verification request message is received and the fourth network device pre-configures a user plane (CP)-based security manner for the relay service indicated by the RSC in the verification request message, determine that the security manner used by the remote UE when communicating between the relay UE and the remote UE is the pre-configured security manner.

Embodiments of the present disclosure provide a communication system, where the communication system includes: a remote UE, a relay UE, and a first network device.

The remote UE is configured to send a direct communication request message to the relay UE.

The relay UE is configured to receive a direct communication request message from the remote UE, and send a relay key request message to the first network device according to the direct communication request message; where the relay key request message is used to verify whether the relay UE and/or the remote UE use a pre-configured secure manner to establish a relay connection; and receive a relay key response message sent by the first network device.

The first network device is configured to receive the relay key request message, and according to the relay key request message, verify whether the security manner used by the relay UE when communicating between the relay UE and the remote UE is a pre-configured security manner, and obtain a verification result; and according to the verification result, send a relay key response message to the relay UE.

The relay UE may be a U2N relay, realizing communication relay between the remote UE and the network device.

The relevant descriptions of the communication request message, relay key request message, relay key response message, etc. here can be referred to any of the foregoing embodiments.

The first network device may be a core network device such as an AMF of the relay UE.

In some embodiments, the communication system further includes: a second network device.

The first network device is configured to send a verification request message to the second network device according to the relay key request message; receive a verification response message returned by the second network device; and according to the verification response message, determining the verification result.

The second network device is configured to receive the verification request message sent by the first network device; and determine whether the security manner used by the relay UE when communicating between the relay UE and the remote UE is the pre-configured security manner according to the verification request message, and obtain a verification result; and send a verification response message to the first network device according to the verification result.

The second network device may be a core network device such as a PCF of the relay UE.

The relevant descriptions of the relay key request message, the verification request message, the verification response message, etc. can be referred to any of the foregoing embodiments.

In some embodiments, the communication system further includes: a third network device.

The first network device is configured to send a proximity communication authentication request message to a third network device; receive a proximity communication authentication response message returned by the third network device.

The third network device is configured to receive the proximity communication authentication request message sent by the first network device; according to the proximity communication authentication request message, verify whether the security manner used by the remote UE when communicating with the relay UE is a pre-configured security manner, and obtain a verification result; and send a proximity communication authentication response message to the first network device according to the verification result.

For example, the third network device includes but is not limited to the AUSF of the remote UE.

For relevant descriptions such as the proximity communication authentication request message and the proximity communication authentication response message, any of the foregoing embodiments may be referred to.

In some embodiments, the communication system further includes: a fourth network device.

The third network device is configured to send a verification request message to the fourth network device according to the proximity communication authentication request message; receive a verification response message returned by the fourth network device; and determine the verification result according to the verification response message.

The fourth network device is configured to receive the verification request message sent by the third network device; according to the verification request message, determine whether the security manner used by the remote UE when communicating between the relay UE and the remote UE is a pre-configured security manner, and obtain a verification result; and send a verification response message to the third network device according to the verification result.

The fourth network device includes but is not limited to a core network device such as the PCF of the remote UE.

The relevant descriptions of the proximity communication authentication request message, the verification request message, the verification response message, etc. can be referred to any of the foregoing embodiments.

An embodiment of the present disclosure provides a communication device, including:
a memory, configured to store instructions executable by a processor(s);
the processor(s), connected to the memory respectively;
where the processor(s) is configured to execute the information processing method provided by any of the foregoing technical solutions.

The processor may include various types of storage media, which are non-transitory computer storage media that can continue to store information stored thereon after the communication device is powered off.

Here, the communication device includes: a relay UE or a network device, and the network device may be any one of the aforementioned first to fourth network devices.

The processor may be connected to the memory through a bus, etc., and is configured to read the executable program stored in the memory, for example, at least one of the methods shown in FIG. 2A to FIG. 2E, FIG. 3A to FIG. 3B, FIG. 4, FIG. 5A to FIG. 5D, FIG. 6 to FIG. 7.

FIG. 13 is a block diagram of a UE 800 according to an exemplary embodiment. For example, the UE 800 may be a mobile phone, a computer, a digital broadcast user equipment, a messaging device, a gaming console, a tablet, a medical device, exercise equipment, a personal digital assistant, and the like.

Referring to FIG. 13, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to generate all or part of the steps in the methods described above. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the UE 800. Examples of such data include instructions for any application or method operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power supply component 806 provides power to various components of the UE 800. The power component 806 may include a power management system, one or more power sources, and any other components associated with the generation, management, and distribution of power in the UE 800.

The multimedia component 808 includes a screen that provides an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or rear camera may receive an external multimedia datum while the UE 800 is in an operation mode, such as photographing mode or a video mode. Each of the front camera and the rear camera may be a fixed optical lens system or have a focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For example, the sensor component 814 may detect the open/closed status of the device 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G or 3G, or a combination thereof. In one exemplary embodiment, the communication component 816 receives a broadcast signal or broadcast associated information from an external broadcast management system via a broadcast channel. In an exemplary embodiment, the communication component 816 further includes a near field communications (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, there is also provided a non-transitory computer-readable storage medium including instructions, such as included in the memory 804, executable by the processor 820 of the UE 800, for performing the above-described methods. For example, the non-transitory computer-readable storage medium may be a ROM, a random access memory (RAM), a CD-ROM, a magnetic tape, a floppy disc, an optical data storage device, and the like.

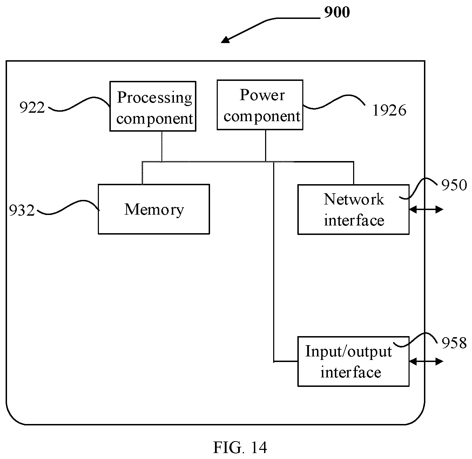

As shown in FIG. 14, an embodiment of the present disclosure shows the structure of a network device. For example, the network device 900 may be provided as a network side device. The network device may be any one of the aforementioned first to fourth network devices.

Referring to FIG. 14, the network device 900 includes a processing component 922, which further includes one or more processors, and a memory resource represented by a memory 932 for storing instructions executable by the processing component 922, such as an application program. The application program stored in memory 932 may include one or more modules, each corresponding to a set of instructions. In addition, the processing component 922 is configured to execute instructions to perform any of the foregoing methods applied to the access device, for example, the method shown in any one of FIGs. 2A to 2E, FIGs. 3A to 3B, FIG. 4, FIGs. 5A to 5D, and FIGs. 6 to 7.

The network device 900 may also include a power component 926 configured to perform power management of the network device 900, a wired or wireless network interface 950 configured to connect the network device 900 to a network, and an input-output (I/O) interface 958. The network device 900 may operate based on an operating system stored in the memory 932, such as a Windows Server^{™}, a Mac OS X^{™}, a Unix^{™}, a Linux^{™}, a FreeBSD^{™} or the like.

Other embodiments of the present disclosure will be readily apparent to those skilled in the art from consideration of the specification and practice of the contents disclosed here. The present disclosure is intended to cover any variations, uses, or adaptations of the present disclosure, which follows the general principles thereof and includes the common knowledge or customary technical means in the technical field that is not disclosed in the present disclosure. The specification and embodiments are considered as exemplary only, with a true scope and spirit of the present disclosure being indicated by the appending claims.

It is to be understood that the present disclosure is not limited to the precise construction described above and illustrated in the accompanying drawings, and various modifications and changes may be made without departing from the scope thereof. The scope of the present disclosure is limited only by the appended claims.

## Claims

1. An information processing method, executed by a relay UE, wherein the method comprises:
receiving a direct communication request message sent by a remote UE;
sending a relay key request message to a first network device according to the direct communication request message; wherein the relay key request message is used to verify whether the relay UE and/or the remote UE uses a pre-configured security manner to establish a relay connection; and
receiving a relay key response message sent by the first network device.

2. The method according to claim 1, further comprising:
in response to the relay key response message indicating that the verification is successful, sending a direct security mode command to the remote UE.

3. The method according to claim 1 or 2, further comprising:
in response to the relay key response message indicating that the verification fails, sending a direct communication reject message to the remote UE.

4. The method according to any one of claims 1 to 3, further comprising:
receiving service authorization and configuration information;
in response to receiving the direct communication request message, determining whether the security manner used by the remote UE is a security manner indicated by the service authorization and configuration information; and
sending the relay key request message to the first network device according to the direct communication request message comprises:
in response to the security manner used by the remote UE being the security manner indicated by the service authorization and configuration information, sending the relay key request message to the first network device according to the direct communication request message.

5. The method according to claim 4, further comprising:
in response to the security manner used by the remote UE not being the security manner indicated by the service authorization and configuration information, sending a direct communication reject message to the remote UE.

6. The method according to claim 4 or 5, wherein determining whether the security manner used by the remote UE is the security manner indicated by the service authorization and configuration information in response to receiving the direct communication request message, comprises at least one of:
in response to receiving a relay service indicated by a relay service code (RSC) in the direct communication request message and the direct communication request message comprising the remote UE and a root key identifier and a random number, determining that the remote UE uses a control plane (CP)-based security manner;
in response to the service authorization and configuration information indicating the CP-based security manner, determining that the security manner used by the remote UE is the security manner indicated by the service authorization and configuration information;
in response to the service authorization and configuration information indicating a user plane (UP)-based security manner, determining that the security manner used by the remote UE is not the security manner indicated by the service authorization and configuration information.

7. The method according to claim 4 or 5, wherein determining whether the security manner used by the remote UE is the security manner indicated by the service authorization and configuration information in response to receiving the direct communication request message, comprises at least one of:
in response to receiving a relay service indicated by a relay service code (RSC) in the direct communication request message and the direct communication request message comprises a root key identifier and a freshness parameter of a root key sent by the remote UE, determining that the remote UE uses a user plane (UP)-based security manner;
in response to the service authorization and configuration information indicating the UP-based security manner, determining that the security manner used by the remote UE is the security manner indicated by the service authorization and configuration information;
in response to the service authorization and configuration information indicating a CP-based security manner, determining that the security manner used by the remote UE is not the security manner indicated by the service authorization and configuration information.

8. An information processing method, executed by a first network device, wherein the method comprises:
receiving a relay key request message sent by a relay UE;
according to the relay key request message, verifying whether a security manner used by the relay UE when communicating between the relay UE and a remote UE is a pre-configured security manner, and obtaining a verification result; and
sending a relay key response message to the relay UE according to the verification result.

9. The method according to claim 8, wherein verifying whether the security manner used by the relay UE when communicating between the relay UE and the remote UE is the pre-configured security manner according to the relay key request message and obtaining the verification result, comprises:
sending a verification request message to a second network device according to the relay key request message;
receiving a verification response message returned by the second network device; and
determining the verification result according to the verification response message.

10. The method according to claim 9, wherein verifying whether the security manner used by the relay UE when communicating between the relay UE and the remote UE is the pre-configured security manner according to the relay key request message and obtaining the verification result, comprises at least one of:
in a case that the relay key request message determines that the security manner used by the relay UE is not a security manner pre-configured by the second network device, sending the relay key response message indicating that the verification fails to the relay UE;
in a case of determining according to the relay key request message that the security manner used by the relay UE is the security manner pre-configured by the second network device, sending a proximity communication authentication request message to a third network device.

11. An information processing method, executed by a second network device, wherein the method comprises:
receiving a verification request message sent by a first network device;
according to the verification request message, determining whether a security manner used by a relay UE when communicating between the relay UE and a remote UE is a pre-configured security manner, and obtaining a verification result; and
according to the verification result, sending a verification response message to the first network device.

12. The method according to claim 11, wherein according to a relay service indicated by a relay service code (RSC) in the verification request message, determining whether the security manner used by the relay UE when communicating between the relay UE and the remote UE is the security manner pre-configured for the relay service, and obtaining the verification result, comprises at least one of:
in a case that the verification request message is received and the second network device pre-configures a user plane (UP)-based security manner for the relay service indicated by the RSC in the verification request message, determining that the security manner used by the relay UE when communicating between the relay UE and the remote UE is not the pre-configured security manner;
in a case that the verification request message is received and the second network device pre-configures a user plane (CP)-based security manner for the relay service indicated by the RSC in the verification request message, determining that the security manner used by the relay UE when communicating between the relay UE and the remote UE is the pre-configured security manner.

13. An information processing method, executed by a third network device, wherein the method comprises:
receiving a proximity communication authentication request message sent by a first network device;
according to the proximity communication authentication request message, verifying whether a security manner used by a remote UE when communicating between the remote UE and a relay UE is a pre-configured security manner, and obtaining a verification result; and
according to the verification result, sending a proximity communication authentication response message to the first network device.

14. The method according to claim 13, wherein verifying whether the security manner used by the remote UE when communicating between the remote UE and the relay UE is the pre-configured security manner according to the proximity communication authentication request message, and obtaining the verification result, comprises:
sending a verification request message to a fourth network device according to the proximity communication authentication request message;
receiving a verification response message returned by the fourth network device; and
determining the verification result according to the verification response message.

15. The method according to claim 14, wherein verifying whether the security manner used by the remote UE when communicating between the remote UE and the relay UE is the pre-configured manner according to the proximity communication authentication request message, and obtaining the verification result, comprises:
in a case that the security manner used by the remote UE is not a security manner pre-configured by the fourth network device, sending the proximity communication authentication response message indicating that the verification fails to the first network device;
in a case that the security manner used by the remote UE is the security manner pre-configured by the fourth network device, sending the proximity communication authentication response message indicating that the verification is successful to the first network device.

16. The method according to claim 15, wherein
the proximity communication authentication response message indicating that the verification fails comprises: a failure cause;
and/or,
the proximity communication authentication response message indicating that the verification is successful comprises: an intermediate key for relay transmission between the relay UE and the remote UE.

17. An information processing method, executed by a fourth network device, wherein the method comprises:
receiving a verification request message sent by a third network device;
according to the verification request message, determining whether a security manner used by a remote UE when communicating between a relay UE and the remote UE is a pre-configured security manner, and obtaining a verification result; and
sending a verification response message to the third network device according to the verification result.

18. The method according to claim 17, wherein determining whether the security manner used by the remote UE when communicating between the relay UE and the remote UE is the pre-configured security manner according to a relay service indicated by an RSC in the verification request message, and obtaining the verification result, comprises:
in a case that the verification request message is received and the fourth network device pre-configures a user plane (UP)-based security manner for the relay service indicated by the RSC in the verification request message, determining that the security manner used by the remote UE when communicating between the relay UE and the remote UE is not the pre-configured security manner;
or,
in a case that the verification request message is received and the fourth network device pre-configures a user plane (CP)-based security manner for the relay service indicated by the RSC in the verification request message, determining that the security manner used by the remote UE when communicating between the relay UE and the remote UE is the pre-configured security manner.

19. An information processing apparatus, comprising:
a first receiving module, configured to receive a direct communication request message sent by a remote UE;
a first sending module, configured to send a relay key request message to a first network device according to the direct communication request message; wherein the relay key request message is used to verify whether the relay UE and/or the remote UE uses a pre-configured security manner to establish a relay connection; and
a first receiving module, configured to receive a relay key response message sent by the first network device.

20. An information processing apparatus, comprising:
a second receiving module, configured to receive a relay key request message sent by a relay UE;
a first verification module, configured to verify, according to the relay key request message, whether a security manner used by the relay UE when communicating between the relay UE and a remote UE is a pre-configured security manner, and obtain a verification result; and
a second sending module, configured to send a relay key response message to the relay UE according to the verification result.

21. An information processing apparatus, comprising:
a third receiving module, configured to receive a verification request message sent by a first network device;
a second verification module, configured to determine, according to the verification request message, whether a security manner used by a relay UE when communicating between the relay UE and a remote UE is a pre-configured security manner, and obtain a verification result; and
a third sending module, configured to send a verification response message to the first network device according to the verification result.

22. An information processing method, comprising:
a fourth receiving module, configured to receive a proximity communication authentication request message sent by a first network device;
a third verification module, configured to verify, according to the proximity communication authentication request message, whether a security manner used by a remote UE when communicating between the remote UE and a relay UE is a pre-configured security manner, and obtain a verification result; and
a fourth sending module, configured to send a proximity communication authentication response message to the first network device according to the verification result.

23. An information processing apparatus, comprising:
a fifth receiving module, configured to receive a verification request message sent by a third network device;
a fourth verification module, configured to determine, according to the verification request message, whether a security manner used by a remote UE when communicating between a relay UE and the remote UE is a pre-configured security manner, and obtain a verification result; and
a fifth sending module, configured to send a verification response message to the third network device according to the verification result.

24. A communication system, wherein the communication system comprises: a remote UE, a relay UE and a first network device;
the remote UE is configured to send a direct communication request message to the relay UE;
the relay UE is configured to receive the direct request message from the remote UE, and send a relay key request message to the first network device according to the direct communication request message, the relay key request message being used to verify whether the relay UE and/or the remote UE uses a pre-configured security manner to establish a relay connection; and receive a relay key response message sent by the first network device;
the first network device is configured to receive the relay key request message, and verify whether the security manner used by the relay UE when communicating between the relay UE and the remote UE is the pre-configured security manner according to the relay key request message, and obtain a verification result; and send a relay key response message to the relay UE according to the verification result.

25. The system according to claim 24, wherein the communication system further comprises: a second network device;
the first network device is configured to send a verification request message to the second network device according to the relay key request message; receive a verification response message returned by the second network device; and according to the verification response message, determining the verification result;
the second network device is configured to receive the verification request message sent by the first network device; determine whether the security manner used by the relay UE when communicating between the relay UE and the remote UE is the pre-configured security manner according to the verification request message, and obtain the verification result; and send the verification response message to the first network device according to the verification result.

26. The system according to claim 25, wherein the communication system further comprises: a third network device;
the first network device is configured to send a proximity communication authentication request message to the third network device; and receive a proximity communication authentication response message returned by the third network device;
the third network device is configured to receive the proximity communication authentication request message sent by the first network device; according to the proximity communication authentication request message, verify whether the security manner used by the remote UE when communicating between the remote UE and the relay UE is the pre-configured security manner, and obtain the verification result; and send the proximity communication authentication response message to the first network device according to the verification result.

27. The method according to claim 26, wherein the communication system further comprises: a fourth network device;
the third network device is configured to send a verification request message to the fourth network device according to the proximity communication authentication request message; receive a verification response message returned by the fourth network device; and determine the verification result according to the verification response message;
the fourth network device is configured to receive the verification request message sent by the third network device; according to the verification request message, determine whether the security manner used by the remote UE when communicating between the relay UE and the remote UE is the pre-configured security manner, and obtain a verification result; and send the verification response message to the third network device according to the verification result.

28. A communication device, comprising a processor, a transceiver, a memory, and an executable program stored in the memory and capable of being run by the processor, wherein when the processor runs the executable program, the method according to any one of claims 1 to 7, 8 to 10, 11 to 12, 13 to 16, or 17 to 18 is executed.

29. A computer storage medium that stores an executable program; wherein after the executable program is executed by a processor, the method according to any one of claims 1 to 7, 8 to 10, 11 to 12, 13 to 16 or 17 to 18 can be implemented.
